(19) Europäisches Patentamt
European Patent Office
Office européen des brevets

(11) **EP 3 746 753 B1**

(12) **EUROPÄISCHE PATENTSCHRIFT**

(45) Veröffentlichungstag und Bekanntmachung des Hinweises auf die Patenterteilung:
**23.11.2022  Patentblatt 2022/47**

(21) Anmeldenummer: **19700591.1**

(22) Anmeldetag: **14.01.2019**

(51) Internationale Patentklassifikation (IPC):
**G01F 23/284** (2006.01)    **G01S 13/88** (2006.01)
**G01F 25/00** (2022.01)    **G01F 25/20** (2022.01)
**G01S 7/35** (2006.01)    **G01S 7/40** (2006.01)
**G01S 7/03** (2006.01)    **G01S 13/34** (2006.01)

(52) Gemeinsame Patentklassifikation (CPC):
**G01F 23/284; G01F 25/20; G01S 7/354;**
**G01S 7/4021; G01S 7/4052; G01S 7/4091;**
**G01S 13/88;** G01S 7/038; G01S 13/343

(86) Internationale Anmeldenummer:
**PCT/EP2019/050806**

(87) Internationale Veröffentlichungsnummer:
**WO 2019/149513 (08.08.2019 Gazette 2019/32)**

(54) **VERFAHREN ZUR DETEKTION VON POTENTIELLEN FEHLERZUSTÄNDEN AN EINEM FMCW-BASIERTEN FÜLLSTANDSMESSGERÄT**

METHOD FOR DETECTING POTENTIAL FAULTY STATES ON AN FMCW-BASED FILLING LEVEL MEASURING APPARATUS

PROCÉDÉ DE DÉTECTION D'ÉTATS D'ERREUR POTENTIELS SUR UN DISPOSITIF DE MESURE DE REMPLISSAGE À BASE DE FMCW

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.02.2018   DE 102018102367**

(43) Veröffentlichungstag der Anmeldung:
**09.12.2020   Patentblatt 2020/50**

(73) Patentinhaber: **Endress+Hauser SE+Co. KG**
**79689 Maulburg (DE)**

(72) Erfinder:
• **SAUTERMEISTER, Manuel**
**79650 Schopfheim (DE)**

• **SCHWÖRER, Lukas**
**79650 Schopfheim (DE)**
• **MAYER, Winfried**
**89290 Buch (DE)**

(74) Vertreter: **Koslowski, Christine Adelheid**
**Endress+Hauser Group Services**
**(Deutschland) AG+Co. KG**
**Colmarer Straße 6**
**79576 Weil am Rhein (DE)**

(56) Entgegenhaltungen:
DE-A1- 10 142 538    DE-A1- 10 142 538
US-A1- 2008 143 583    US-A1- 2017 211 963
US-A1- 2019 360 853    US-B2- 9 128 181
US-B2- 9 128 181

**Beschreibung**

Die Erfindung betrifft ein Verfahren zur Detektion eines etwaigen Fehlerzustandes an einem FMCW-basierten Füllstandsmessgerät, sowie ein zur Ausführung dieses Verfahrens geeignetes Füllstandsmessgerät.

In der Automatisierungstechnik, insbesondere in der Prozessautomatisie-rungstechnik, werden vielfach Feldgeräte eingesetzt, die zur Erfassung und/oder zur Beeinflussung von Prozessvariablen dienen. Zur Erfassung von Prozessvariablen werden Sensoren eingesetzt, die beispielsweise in Füllstandsmessgeräten, Durchflussmessgeräten, Druck- und Temperaturmessgeräten, pH-Redoxpotential-Messgeräten, Leitfähigkeitsmessgeräten, usw. zum Einsatz kommen. Sie erfassen die entsprechenden Prozessvariablen, wie Füllstand, Durchfluss, Druck, Temperatur, pH-Wert, Redoxpotential oder Leitfähigkeit. Eine Vielzahl dieser Feldgeräte wird von der Firma Endress + Hauser hergestellt und vertrieben.

Zur Füllstandsmessung von Füllgütern in Behältern haben sich berührungslose Messverfahren etabliert, da sie robust und wartungsarm sind (unter dem Begriff "Behälter" werden im Rahmen der Erfindung auch nicht-abgeschlossene Behältnisse, wie beispielsweise Becken, Seen oder fließende Gewässer verstanden). Ein weiterer Vorteil berührungsloser Messverfahren besteht in ihrer Fähigkeit, den Füllstand quasi kontinuierlich, also mit einer sehr hohen Auflösung messen zu können. Dementsprechend werden hierzu vorwiegend Radar-basierte Messverfahren eingesetzt. Ein etabliertes Messprinzip bildet hierbei das FMCW-Messprinzip ("Frequency Modulated Continuos Wafe"). Es beruht darauf, dass ein kontinuierliches Radar-Signal ausgesendet wird und das Antwort-Signal, das an der Oberfläche des Füllgutes reflektiert wird, mit der Frequenz des momentan ausgesendeten Radar-Signals verglichen wird. Dabei liegt die Frequenz des Radar-Signals in einem festgelegten Frequenzband im Bereich einer standarisierten Mittenfrequenz ($f_0$). Standardmäßig werden hier Frequenzbänder im 6 GHz-Band, dem 26 GHz, oder dem 79 GHz-Band verwendet. Kennzeichnend für das FMCW Verfahren ist hierbei, dass die Sende-Frequenz nicht konstant ist, sondern sich periodisch innerhalb eines Frequenzbandes ändert. Die Änderung kann hierbei linear sein und eine Sägezahnbeziehungsweise Dreiecks-Form aufweisen, eine Sinus-Förmige Änderung kann je nach Anwendung jedoch auch verwendet werden.

Beim FMCW-basierten Füllstands-Messverfahren besteht eine besondere Herausforderung darin, das empfangene Antwort-Signal bzw. das hieraus abgeleitete Mess-Signal zweifelsfrei von überlagerten Störanteilen abgrenzen zu können. Dabei soll das Antwort-Signal im Idealfall ausschließlich durch Reflektion des Radar-Signals an der Füllgut-Oberfläche erzeugt werden. Aufgrund von Störeinflüssen entsprechender Fehlerquellen können jedoch fehlerhafte Antwort-Signale generiert werden. Eine wesentliche Ursache ist hierbei der Empfang von Störsignalen, die durch Reflektion des Radar-Signals an Störkörpern, wie Rührwerken oder Einbauten im Behälter hervorgerufen werden. Es können jedoch auch Geräte-interne Störsignale auftreten, wenn es sich bei der Fehlerquelle beispielsweise um eine Rückkopplung in der Antenneneinheit des Füllstandsmessgerätes handelt.

Mittlerweile existieren viele technische Ansätze zur Filterung von Störsignalen bei FMCWbasierter Füllstandsmessung, um das Antwort-Signal korrigieren zu können. So ist aus der internationalen Veröffentlichungsschrift WO 2012/139852 A1 ein Verfahren zur Kalibration von FMCW-basierten Füllstandsmessgeräten bekannt, bei dem mittels eines schwingenden Referenzreflektors, der zwischen Messgerät und Füllgut positioniert ist, selbst während des normalen Messbetriebs ein eindeutiges Referenz-Messsignal generiert werden kann.

In der deutschen Patentanmeldung DE 10 2008 050 117 A1 wird ein Verfahren zur Korrektur interner Störsignale des Füllstandsmessgerätes beschrieben. Das dort beschriebene Verfahren basiert auf Messung eines Referenz-Messsignals in einer weitestgehend absorbierenden Test-Umgebung, und anschließender Erstellung einer Korrekturkurve auf Basis des Referenz-Signals.

Mittels der genannten Verfahren können Störsignale zwar gegebenenfalls kompensiert werden, eine Alterung oder Verschmutzung des Füllstandsmessgerätes verändert jedoch auch die Störsignale, beziehungsweise dass Mess-Signal über die Zeit. Daher ist es interessant, die Korrektur im laufenden Betrieb durchzuführen und bei Veränderung der Kompensationswerte auf einen Fehlerzustand zu schließen. Die Detektion eines solchen Fehlerzustandes ist gerade bei Füllstandsmessgeräten erstrebenswert, die in kritischen Prozessanlagen mit hoher erforderlicher Zuverlässigkeit eingesetzt werden. Die notwendigen Vorrausetzungen für solch einen Einsatz werden beispielsweise in der Norm IEC/EN 61508 zur funktionalen Sicherheit beschrieben (auch bekannt unter dem Begriff "Safety Integrity Level, SIL"). DE102012003373 offenbart ein Verfahren und ein Füllstandsmessgerät zur Detektion eines Fehlerzustandes in diesem Gerät durch Senden von Radarsignalen mit modulierten Frequenzen.

Der Erfindung liegt daher die Aufgabe zugrunde, ein Verfahren bereitzustellen, mit dem zuverlässig ein Fehlerzustand an FMCW-basierten Füllstandsmessgeräten detektiert wird.

Die Erfindung löst diese Aufgabe durch ein Verfahren zur Detektion eines Fehlerzustandes an einem FMCW-basierten Füllstandsmessgerät, das zur Messung eines Füllstands eines einem Behälter befindlichen Füllgutes dient. Es umfasst zumindest folgende Verfahrensschritte:

- Aussenden eines Radar-Signals,
- Empfang eines Antwort-Signals,
- Erstellung eines Mess-Signals anhand von zumindest dem Antwort-Signal,
- Ermittlung eines Korrelations-Koeffizienten mittels Korrelation des Mess-Signals mit einem Referenz-Signal, und
- Detektion des Fehlerzustandes, sofern der Korrelations-Koeffizient einen vordefinierten Mindest-Wert unterschreitet.

Dabei ist ein Fehlerzustand im Rahmen der Erfindung als ein Zustand des Füllstandsmessgerätes definiert, bei dem nicht sichergestellt ist, dass das Füllstandsmessgerät einen korrekten Füllstand ermittelt.

Somit kann durch das erfindungsgemäße Verfahren mit hoher Sicherheit ein etwaiger Fehlerzustand am Füllstandsmessgerät detektiert werden. Hierdurch wird erreicht, dass das Füllstandsmessgerät auch in Prozessanlagen und Messumgebungen, die äußerst zuverlässige Messgeräte bzw. Messdaten erfordern, einsetzbar ist.

Bezüglich der Berechnung des Korrelations-Koeffizienten bietet es sich an, wenn der Korrelations-Koeffizient mittels einer Kreuzkorrelation, insbesondere gemäß der bei Kreuzkorrelation üblicherweise zugrundeliegenden Formel

$$K = \sum_{i=1}^{n-\varphi} A_{ZF,i} * A_{ref,i+\varphi}$$

berechnet wird.

Als Referenz-Signal ist im Kontext der Erfindung prinzipiell jedes Mess-Signal zu verstehen, das eine definierte Referenzsituation der Füllstandsmessung, entweder im Behälter oder in einer anderen Referenz-Umgebung, repräsentiert. Dementsprechend gibt es bezüglich der Implementierung des Referenz-Signals verschiedene Möglichkeiten: Zum einen kann das Referenz-Signal auf einer theoretisch hergeleiteten Ideal-Echokurve basieren. Als Grundlage dafür kann beispielsweise eine ideal reflektierende Ebene mit bekannter Entfernung und unendlicher Ausdehnung herangezogen werden. Alternativ kann das Referenz-Signal auf einer Referenz-Messung, die vom Füllstandsmessgerät unter vorbekannten Referenz-Messbedingungen im Behälter durchgeführt ist, basieren. Als Referenz-Messbedingung im Behälter kann bspw. ein vorherrschender bzw. unterschrittener Mindestfüllstand herangezogen werden. Hierbei kann das Vorliegen eines sauberen Behälter-Inneren eine zusätzliche Referenz-Messbedingung darstellen.

Eine weitere mögliche Referenz-Messbedingung zur Erstellung eines Referenz-Signals, bei der ausschließlich interne Fehlerquellen des Füllstandsmessgerätes abgebildet werden, besteht in der Aufnahme des Referenz-Signals in einer anderweitigen Test-Umgebung wie bspw. einer Absorptionskammer, in der das Radar-Signal vollständig absorbiert wird und somit kein Antwort-Signal erzeugt wird.

Darüber hinaus kann das erfindungsgemäße Verfahren in der Form weiterentwickelt werden, dass anhand des Korrelations-Koeffizienten und dessen Änderung über fortlaufende Füllstands-Messungen eine zeitabhängige Funktion des Korrelations-Koeffizienten erstellt wird. Dementsprechend kann für den Fall, dass der Korrelations-Koeffizient den vordefinierten Mindest-Wert noch nicht unterschritten hat, anhand der zeitabhängigen Funktion des Korrelations-Koeffizienten eine Restbetriebszeit, zu der der Mindest-Wert unterschritten sein wird, berechnet werden. Dieser Weiterbildung liegt also die Idee zugrunde, durch Ermittlung der zeitlichen Entwicklung des Korrelations-Koeffizienten über zumindest zwei oder mehrere Füllstands-Messungen hinweg eine Restbetriebszeit zu approximieren, bei der der Mindest-Wert voraussichtlich überschritten werden wird und somit der Fehlerzustand am Füllstandsmessgerät eintreten wird. Voraussetzung hierfür ist, dass der Korrelations-Koeffizient zum aktuellen Zeitpunkt der Mindest-Wert noch nicht überschritten hat.

Mittels dieser Weiterbildung der Erfindung kann somit ein Fehlerzustand gemäß dem Prinzip der "Predictive Maintenance" bereits im Voraus prognostiziert werden. Hierbei kann die zeitabhängige Funktion des Korrelations-Koeffizienten mittels Regression, im einfachsten Fall einer linearen Regression erstellt werden. Allgemein ist die Wahl eines geeigneten Regressionstypen (also auch exponentiell, logarithmisch, polynomiell, gleitende Mittelwertbildung, etc.) im Sinne der Erfindung nicht auf einen speziellen Regressions-Typ beschränkt, sondern vielmehr vom individuellen zeitlichen Verlauf des Korrelations-Koeffizienten abhängig zu machen. Zur Durchführung der Regression und/oder zur Ermittlung eines geeigneten Regressionstyps kann dementsprechend beispielsweise die Methode der kleinsten Quadrate angewendet werden.

Die Aufgabe, die der Erfindung zugrunde liegt, wird analog zum erfindungsgemäßen Verfahren durch ein Füllstandsmessgerät zur Durchführung des in zumindest einem der vorhergehend beschriebenen Varianten beschriebenen Verfahrens gelöst. Hierzu umfasst ein solches Füllstandsmessgerät:

- Eine Signalerzeugungs-Schaltung zur Erzeugung eines Radar-basierten Signals,
- eine Sendeantenne zum Aussenden des Radar-Signals,
- eine Empfangsantenne zum Empfang des Antwort-Signals,
- einen Mischer zur Erzeugung des Mess-Signals mittels Mischen des Radar-Signals ($S_{HF}$) mit dem Antwort-Signal,
- eine Auswerte-Einheit zur

   o Ermittlung des Füllstandes anhand des Mess-Signals,
   o Ermittlung des Korrelations-Koeffizienten anhand des Mess-Signals und des Referenz-Signals, und zur

o Detektion des Fehlerzustandes, sofern der Korrelations-Koeffizient einen vordefinierten Mindest-Wert unterschreitet.

Dabei bietet es sich an, die Auswerte-Einheit so auszulegen, dass sie zur Ermittlung des Füllstandes eine Fourier-Transformation, insbesondere eine Fast Fourier Transformation, des Mess-Signals durchzuführt, da diese im Vergleich zu anderen Berechnungsarten rechenarm durchführbar ist.

Nachfolgend wird die Erfindung anhand folgender Figuren näher erläutert. Es zeigt:

Fig. 1: Eine standardmäßige Anordnung eines FMCW basierten Füllstandsmessgerätes an einem Behälter,

Fig. 2: ein typischer Schaltungsaufbau eines FMCW-basierten Füllstandsmessgerätes zur Durchführung des erfindungsgemäßen Verfahrens, und

Fig. 3: schematische Darstellungen zur Ermittlung des Korrelations-Koeffizienten.

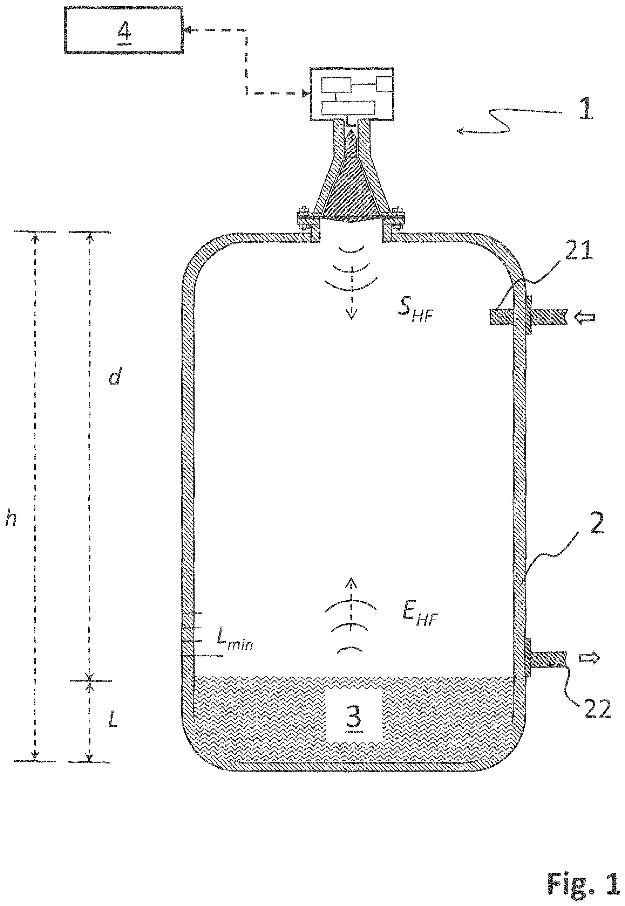

Zum Verständnis des erfindungsgemäßen Verfahrens wird in Fig. 1 zunächst eine typische Anordnung eines nach dem FMCW-Messprinzip arbeitenden Füllstandsmessgerätes 1 an einem Behälter 2 gezeigt. In dem Behälter 2 befindet sich ein Füllgut 3, dessen Füllstand L durch das Füllstandsmessgerät 1 zu bestimmen ist. Hierzu ist das Füllstandsmessgerät 1 in einer vorbekannten Einbauhöhe h oberhalb des Füllgutes 3 am Behälter 2 angebracht. Der Behälter 2 kann hierbei je nach Anwendung bis zu mehr als 100 m hoch sein.

Das Füllstandsmessgerät 1 ist so am Behälter 2 angeordnet, dass es ein für FMCW typisches Radar-Signal $S_{HF}$ in Richtung der Oberfläche des Füllgutes 3 aussendet. Nach Reflektion des Radar-Signals $S_{HF}$ an der Füllgut-Oberfläche (oder unerwünschter Weise einem Störkörper im Behälter 2, wie zum Beispiel einem in den Behälter hineinragenden Zufluss 21) empfängt das Füllstandsmessgerät 1 ein entsprechendes Antwort-Signal $E_{HF}$. Dabei ist, wie bei FMCW charakteristisch, der Frequenzunterschied zwischen dem momentan ausgesendeten Radar-Signal $S_{HF}$ und dem Antwort-Signal $E_{HF}$ abhängig vom Abstand d = h - L zur Füllgut-Oberfläche. Somit kann auf Basis des gemessenen Frequenzunterschiedes entsprechend der Füllstand bestimmt werden.

In der Regel ist das Füllstandsmessgerät 1 über ein Bussystem, etwa "PROFIBUS", "HART" oder "Wireless HART" mit einer übergeordneten Einheit 4, beispielsweise einem Prozessleitsystem, verbunden. Hierüber können zum einen Informationen über einen etwaigen Fehlerzustand des Füllstandsmessgerätes 1 kommuniziert werden. Es können auch Informationen über den Füllstand L übermittelt werden, um gegebenenfalls am Behälter 2 vorhandene Zuflüsse 21 und/oder Abflüsse 22 zu steuern.

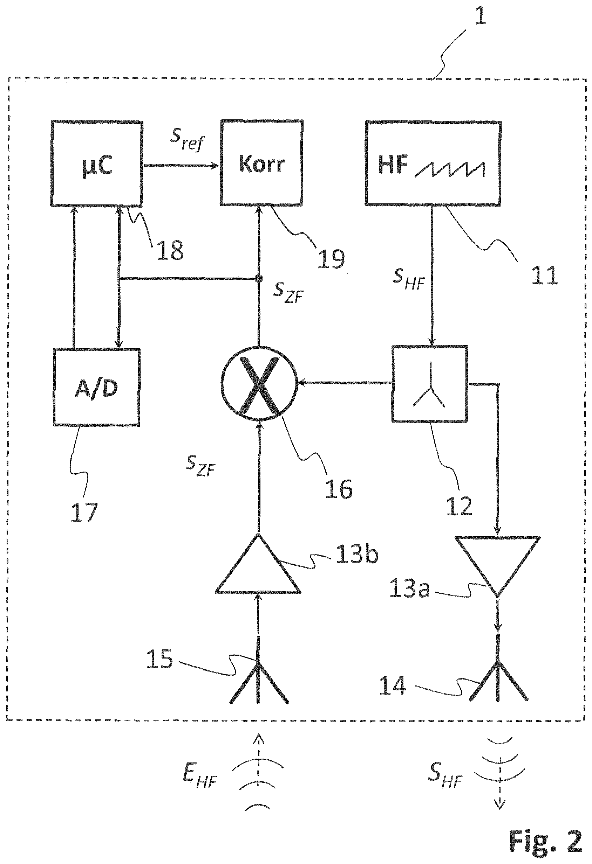

In Fig. 2 ist ein geeigneter Schaltungsaufbau eines FMCW-basierten Füllstandsmessgerätes 1 gezeigt, mit dem das erfindungsgemäße Verfahren zur Detektion eines etwaigen Fehlerzustandes umgesetzt werden kann: Zur Erzeugung eines beim FMCW-Messverfahren typischen Hochfrequenz-Signals $s_{HF}$ umfasst das Füllstandsmessgerät 1 eine entsprechende Signalerzeugungs-Schaltung 11, beispielsweise basierend auf einer PLL ("Phase Locked Loop" also ein per Rückkopplung Frequenz-stabil gehaltener Hochfrequenz-Oszillator, bspw. auf Basis eines spannungsgesteuerten Oszillators). Dabei ist das Hochfrequenz-Signal $s_{HF}$ so bemessen, dass es eine Frequenz im Mikrowellenbereich (standardmäßig bei 6 GHz, 26 GHz oder 79 GHz, möglich ist aber auch eine Frequenz bis über 100 GHz) aufweist. Die Frequenz ist hierbei nicht konstant, sondern variiert periodisch innerhalb einer vorbestimmten Frequenzdifferenz: Im Fall von 79 GHz könnte die Frequenzdifferenz beispielsweise 2 GHz betragen, so dass sich eine entsprechende Frequenz zwischen 78 GHz und 80 GHz einstellt. Üblich ist beim FMCW-Verfahren, dass es sich bei der periodischen Änderung um eine sägezahnförmige (also innerhalb dieser Periode zeitlich konstante) Änderung der Frequenz des Hochfrequenz-Signals $s_{HF}$ handelt. Denkbar wäre jedoch auch jegliche andere Form, bspw. eine sinusförmige Änderung der Frequenz innerhalb der jeweiligen Frequenzdifferenz.

Die Periodizität der (sägezahnförmigen) Änderung kann dabei, wie beim FMCW-Verfahren typisch, in einer Größenordnung von bis zu einigen 100 MHz liegen. Die Frequenzdifferenz des Hochfrequenz-Signals $s_{HF}$ ist in diesem Fall vorzugsweise größtmöglich zu bemessen, da durch Erhöhung der Bandbreite die Auflösung der Füllstandsmessung erhöht werden kann. Somit ist eine generell höhere Frequenz des Hochfrequenz-Signals $s_{HF}$ bezüglich der Auflösung vorteilhaft, weil bei höheren Frequenzen eine absolut gesehen höhere Frequenzdifferenz implementiert werden kann.

Nach dessen Erzeugung wird das Hochfrequenz-Signal $s_{HF}$ über einen Signalteiler 12 (und gegebenenfalls einen Sendeverstärker 13a) einer Sende-Antenne 14 zugeführt. Dort wird das elektrische Hochfrequenz-Signal $s_{HF}$ in das eigentliche Radar-Signal $S_{HF}$ umgewandelt und entsprechend abgestrahlt. Die Auslegung Sende-Antenne wird hierbei von der Frequenz des Radar-Signals $S_{HF}$ abhängig gemacht. Bei Frequenzen zwischen 6 GHz und 26 GHz wird oftmals eine Hornantenne eingesetzt. Vor allem bei höheren Frequenzen ab 79 GHz ist die Antenne in der Regel als Planar-Antenne, bspw. Fraktal-, Patch oder mäanderförmige Antenne auf dem Chip, auf dem sich zumindest die HF-Komponenten (11, 12, 13a/b, 14, 15, 16), des Füllstandsmessgerätes 1 befinden, ausgeführt.

Im Messbetrieb wird durch die Reflektion des Radar-Signals $S_{HF}$ an der Oberfläche des Füllgutes 3 (und/oder an einem Störkörper im Behälter 2, wie beispielsweise einen in den Behälter 2 hineinragenden Zufluss 21, siehe Fig. 1) ein Antwort-Signal $E_{HF}$ erzeugt. Im Falle einer Kalibration oder Referenz-Messung am Füllstandsmessgerät 1 ergibt sich das Antwort-Signal $E_{HF}$ aus Reflektion des Radar-Signals $S_{HF}$ durch entsprechend vordefinierte Referenzbedingungen, bspw. durch ein in einer Messstrecke angeordneten Referenzobjekt mit bekanntem Abstand d. Eine weitere Referenzbedingung könnte auch durch einen genau bekannten Füllstand L im Behälter 2 selbst definiert werden (beispielsweise bei einem bekannten Mindestfüllstand $L_{min}$, der zum Beispiel aufgrund eines entsprechend angeordneten Abflusses 22 nicht weiter absinken kann, siehe wiederum Fig. 1). Darüber hinaus wäre als Referenzbedingung auch eine weitestgehend reflexionsfreie Messumgebung (bspw. eine entsprechende Absorptionskammer, in die das Füllstandsmessgerät ausgerichtet ist) denkbar. In diesem Fall entsteht optimaler Weise gar kein Antwort-Signal $E_{HF}$. Das unter Referenz-bedingungen erhaltene Antwort-Signal $E_{HF}$ wird anschließend entsprechend als Referenz-Signal $s_{ref}$ abgespeichert. Alternativ zur Erstellung des Referenz-Signals $s_{ref}$ durch Messung unter ReferenzBedingungen könnte das Referenz-Signal $s_{ref}$ auch auf einer theoretisch hergeleiteten Ideal-Echokurve basieren.

An einer Empfangs-Antenne 15 des Füllstandsmessgerätes 1 wird das Antwort-Signal $E_{HF}$ empfangen und in ein elektrisches Signal zurückgewandelt (welches wiederum gegebenenfalls durch einen Empfangsverstärker 13b verstärkt werden kann). Dieses wird im Anschluss mittels eines Empfangsmischers 16 mit dem ursprünglichen Hochfrequenz-Signal $s_{HF}$ gemischt, wobei das von der Signalerzeugungs-Schaltung 11 erzeugte Hochfrequenz-Signal $s_{HF}$ hierfür aus einem Signalteiler 12 abgezweigt wird. Hierdurch wird jeweils ein beim FMCW-Verfahren typisches Mess-Signal $s_{ZF}$ (auch als Zwischenfrequenz- oder ZF- Signal bekannt) generiert. Dessen Frequenz $f_{peak}$ ist ohne Störeinflüsse lediglich vom Abstand d abhängig und ermöglicht somit die Messung des Füllstandes L. Im Gegensatz zu den Frequenzen des Radar-Signals $S_{HF}$ und des Antwort-Signals $E_{HF}$ ist die Frequenz $f_{peak}$ des Mess-Signals $s_{ZF}$ aufgrund der Differenzbildung zwischen Radar-Signal $S_{HF}$ und Antwort-Signals $E_{HF}$ durch den Mischer 16 konstant (solange sich der Füllstand L nicht ändert).

Anstelle einer separaten Sende-Antenne 14 und einer Empfangs-Antenne 15 wäre unter Verwendung einer geeigneten Sende-/Empfangsweiche alternativ natürlich auch die Implementierung einer kombinierten Sende-/Empfangsantenne möglich. Diese könnte bei tiefen Frequenzen bis ca. 26 GHz analog zur Verwendung zweier separater Antennen wiederum als Hornantenne, oder hin zu höheren Frequenzen als Planar-Antenne ausgelegt werden.

Zur Ermittlung seiner Frequenz $f_{peak}$ (oder, sofern das Radar-Signal ggf. auch an Störkörpern reflektiert wird, einer Mehrzahl an Frequenzen $f_{peak}$) wird das Mess-Signal $s_{ZF}$ üblicherweise durch eine Digitalisierungs-Einheit 17 einer Analog- /Digital-Wandlung unterzogen. Anschließend kann das digitalisierte Mess-Signal $s_{ZF}$ einer (Fast-) Fourier-Transformation unterzogen und somit in ein einfach auswertbares Frequenzspektrum überführt. Anhand des Maximums des Spektrums kann die Frequenz $f_{peak}$ und somit der Abstand d bzw. Füllstand L bestimmt werden. Bei dem in Fig. 2 dargestellten Ausführungsbeispiel ist hierfür eine entsprechende Auswerte-Einheit 18 vorgesehen. Sofern die Auswerte-Einheit 18 bspw. als Microcontroller, FPGA oder Vergleichbarem ausgelegt ist, kann bereits die Digitalisierungs-Einheit 17 als integraler Funktionsblock der Auswerte-Einheit 18 konzipiert werden.

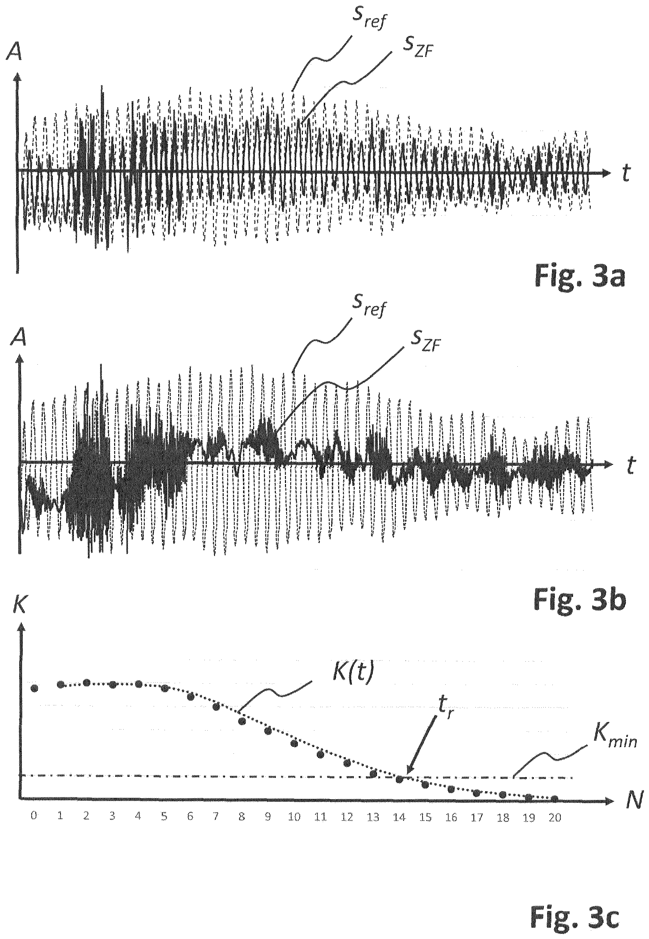

Der zeitliche Verlauf des Mess-Signals $s_{ZF}$, also vor Durchführung der Fourier-Transformation mittels der Digitalisierungs-Einheit 17, ist jeweils in Fig.3a und Fig. 3b dargestellt: Hierbei entstammt das in Fig. 3b dargestellte Mess-Signal $s_{ZF}$ im Vergleich zu dem in Fig.3a geplotteten Mess-Signal $s_{ZF}$ einer späteren Füllstands-Messung. Aus dem Vergleich zwischen Fig. 3a und Fig. 3b wird ersichtlich, dass sich die Signal-Qualität des Mess-Signals $s_{ZF}$ wie unter anderem die Amplitude A oder die Frequenz-Eindeutigkeit mit fortlaufender Anzahl an Messungen verschlechtern kann. Gründe hierfür können beispielsweise eine allmähliche Ansatz-Bildung auf der Sende-Antenne 14 und/oder der Empfangs-Antenne 15 durch staubhaltiges Füllgut 3 sein. Auch interne Fehlerquellen des Füllstandsmessgerätes 1, beispielsweise ein Verstimmen des Mischers 17, kommen hierfür infrage.

Die Verschlechterung zwischen dem in Fig. 3a und Fig. 3b gemessenen Mess-Signal $s_{ZF}$ wird zudem In Bezug zu einem Referenz-Signal $s_{ref}$, das in beiden Figuren mitdargestellt ist, ersichtlich. Dabei kann es sich bei dem Referenz-Signal $s_{ref}$ zum Beispiel um ein abgespeichertes Mess-Signal $s_{ZF}$ handeln, das unter definierten Referenzbedingungen aufgenommen wurde. Das in Fig. 3a/b dargestellte Referenz-Signal entstammt der Inbetriebnahme des Füllstandsmessgerätes 1, bei der das Behälter-Innere sauber und leer war, also der Behälter 2 maximal bis zu dem vordefinierten Mindestfüllstand $L_{min}$ mit Füllgut 3 befüllt war.

Die Erfindung beruht auf der Beobachtung, dass sich eine durch Störeinflüsse bedingte Veränderung des Mess-Signals $s_{ZF}$ sehr direkt auf den Korrelations-Koeffizienten K zwischen dem Mess-Signal $s_{ZF}$ und dem zuvor abgespeicherten Referenz-Signal $s_{ref}$ auswirkt. Ersichtlich wird dies anhand von Fig. 3c, in der der Verlauf des Korrelations-Koeffizienten K in Abhängigkeit der fortschreitenden Anzahl N an Füllstands-Messungen dargestellt ist. Es zeigt sich, dass sich der Korrelations-Koeffizient K mit fortlaufender Anzahl N abschwächt, sofern sich die Signal-Qualität des Mess-Signals $s_{ZF}$ durch zunehmende Störeinflüsse verschlechtert.

Das Vorliegen eines Fehlerzustandes am Füllstandsmessgerät 1 bzw. einer fehlerhaften Füllstands-Messung, kann daher durch Definition eines Mindest-

Wertes $K_{min}$ des Korrelations-Koeffizienten K erkannt werden. Hierbei stellt der Mindest-Wert $K_{min}$ einen Schwellwert dar, ab dem eine zuverlässige Füllstandsmessung nicht mehr möglich ist und somit ein Fehlerzustand des Füllstandsmessgerätes 1 eingetreten ist.

Sofern der Korrelations-Koeffizient K mittels Kreuzkorrelation ermittelt wird, kann die Berechnung auf Basis der Formel

$$K = \sum_{i=1}^{n-\varphi} A_{ZF,i} * A_{ref,i+\varphi}$$

erfolgen. Dabei sind $A_{ZF,i}$ und $A_{ref,i}$ die korrespondierenden, phasengleichen und normierten Amplitudenwerte des Mess-Signals $s_{ZF}$ bzw. des Referenz-Signals $s_{ref}$ (vgl. Fig. 3a und Fig. 3b). Voraussetzung für die korrekte Ermittlung des Korrelations-Koeffizienten K ist, dass das Mess-Signal $s_{ZF}$ und das Referenz-Signal $s_{ref}$, wie insbesondere in Fig. 3a erkennbar ist, keine Phasenverschiebung $\varphi$ zueinander aufweisen. Andernfalls muss dies, wie in der Formel angegeben, bei der Berechnung des Korrelations-Koeffizienten entsprechend korrigiert werden.

Wie zudem aus der obigen Formel hervorgeht, richtet sich der Wert des Korrelations-Koeffizienten K maßgeblich nach den Amplituden A des Mess-Signals $s_{ZF}$ und des Referenz-Signals $s_{ref}$. Bezüglich des Mindest-Wertes $K_{min}$ ist es daher per se nicht möglich, einen festen Wert zu definieren, ab dem das Füllstandsmessgerät 1 als nicht mehr funktionstüchtig einzustufen ist. Wie aus Fig. 3c ableitbar ist, kann der Mindest-Wert $K_{min}$ jedoch beispielsweise in Abhängigkeit des bei der ersten Messung (N = 1, beispielsweise die Messung, in der auch das Referenz-Signal $s_{ref}$ ermittelt wurde) vorherrschenden Korrelations-Koeffizienten K definiert werden, bspw. $K_{min}$ = 1/10 *$K_{N=1}$. Eine sinnvolle Definition des Mindest-Werten $K_{min}$ kann zudem bspw. auch über entsprechende Alterungstests am Füllstandsmessgerät herausgefunden werden.

Wird während des fortschreitenden Betriebs des Füllstandsmessgerätes 1 der Mindest-Wert $K_{min}$ des Korrelations-Koeffizienten K unterschritten, so wird dies durch ein hierfür ausgelegtes Logik-Gatter 19 (siehe Fig. 2) des Füllstandsmessgerätes 1 detektiert. Hierzu wird in dem Logik-Gatter 19 der Korrelations-Koeffizienten K zwischen dem Mess-Signal $s_{ZF}$ und dem Referenz-Signal $s_{ref}$ bspw. auf Basis oben beschriebener Formel errechnet. Zur Berechnung des Korrelations-Koeffizienten K greift das Logik-Gatter 19 das Mess-Signal $s_{ZF}$ am Mischer 16 ab. Das Referenz-Signal $s_{ref}$ wird bspw. von der Auswerte-Einheit 18 erhalten (siehe Fig. 2). Dabei kann auch das Logik-Gatter 19 selbst als integraler Baustein der Auswerte-Einheit 18 ausgelegt sein. Ein etwaiges Unterschreiten des Mindest-Wertes $K_{min}$ bzw. ein Vorliegen des Fehlerzustandes kann wiederum per entsprechender Störmeldung an die übergeordnete Einheit 4 übermittelt werden.

In Fig. 3c wird außerdem eine Weiterbildung des erfindungsgemäßen Verfahrens veranschaulicht. Dieser Weiterbildung liegt die Idee zugrunde, anhand der Verfolgung des Korrelations-Koeffizienten K über zumindest zwei Füllstands-Messungen hinweg eine Restbetriebszeit $t_r$ zu approximieren, bis zu der voraussichtlich der Mindest-Wert $K_{min}$ des Korrelations-Koeffizienten K unterschritten sein wird und somit der Fehlerzustand am Füllstandsmessgerät 1 eintreten wird. Hierzu muss anhand der bis zum jetzigen Zeitpunkt ermittelten Korrelations-Koeffizienten K eine zeitliche Entwicklung des Korrelations-Koeffizienten K in Form einer entsprechenden mathematischen Funktion K(t) erstellt werden. Sinn macht eine solche Berechnung natürlich nur, sofern der Korrelations-Koeffizient K zum Zeitpunkt der jeweils aktuellen Füllstands-Messung den Mindest-Wert $K_{min}$ noch nicht unterschritten hat. Die Erstellung der zeitabhängigen Funktion K(t) des Korrelations-Koeffizienten K und/oder die Berechnung der Restbetriebszeit $t_r$ kann wiederum durch die Auswerte-Einheit 18 (vgl. Fig. 2) erfolgen.

Die in Fig. 3c gezeigte zeitabhängige Funktion K(t) basiert auf Regression des sich ändernden Korrelations-Koeffizienten K mittels des gleitenden Mittelwertes. Allgemein ist die Wahl eines geeigneten Regressionstypen (also auch exponentiell, logarithmisch, etc.) im Sinne der Erfindung jedoch nicht auf einen speziellen Regressionstyp beschränkt, sondern vielmehr vom individuellen Verlauf des Korrelations-Koeffizienten K abhängig zu machen (zur Findung eines geeigneten Regressionstypen und/oder zur Durchführung der eigentlichen Regression könnte beispielsweise die "Least Square Methode", also die Methode der kleinsten Quadrate angewendet werden).

Im Anschluss an die Erstellung der zeitabhängigen Funktion K(t) des Korrelations-Koeffizienten K wird mittels dieser Funktion (ausgehend vom Korrelations-Koeffizienten K des Mess-Signals $s_{ZF}$ zum Zeitpunkt der letzten Füllstands-Messung) die voraussichtliche Restbetriebszeit $t_r$ approximiert, bei der der Korrelations-Koeffizienten K den Mindest-Wert $K_{min}$ unterschritten haben wird. Mittels dieser Weiterbildung der Erfindung kann also ein Fehlerzustand gemäß dem Prinzip der "Predictive Maintenance" bereits vorrausschauend detektiert werden.

**Bezugszeichenliste**

| 1 | Füllstandsmessgerät |
|---|---|
| 2 | Behälter |
| 3 | Füllgut |
| 4 | Übergeordnete Einheit |
| 11 | Signalerzeugungs-Schaltung |
| 12 | Signalteiler |
| 13 a, b | Verstärker |

| | |
|---|---|
| 14 | Sende-Antenne |
| 15 | Empfangs-Antenne |
| 16 | Mischer |
| 17 | Digitalisierungs-Schaltung |
| 18 | Auswerte-Einheit |
| 19 | Logik-Gatter |
| 21 | Zufluss |
| 22 | Abfluss |
| A | Amplitude |
| $A_{ref,i}$ | Amplitude des Referenz-Signals |
| $A_{ZF,i}$ | Amplitude des Mess-Signals |
| d | Abstand |
| $E_{HF}$ | Antwort-Signal |
| f | Frequenz |
| $f_{peak}$ | Frequenz des Zwischenfrequenzsignals |
| h | Einbauhöhe des Füllstandsmessgerätes |
| i | Indizes der einzelnen Messwerte des Mess-/Referenz-Signals |
| K | Korrelations-Koeffizient |
| K(t) | Zeitabhängige Funktion des Korrelations-Koeffizienten |
| $K_{min}$ | Mindest-Wert |
| L | Füllstand |
| $L_{min}$ | Mindestfüllstand |
| N | Anzahl der Messungen |
| n | Anzahl der Messwerte pro Mess-/Referenz-Signal |
| $S_{HF}$ | Radar-Signal |
| $s_{HF}$ | Hochfrequenz-Signal |
| $s_{ref}$ | Referenz-Signal |
| $s_{ZF}$ | Mess-Signal |
| $t_r$ | Restbetriebszeit |
| $\varphi$ | Phasenverschiebung des Referenz-Signals |

**Patentansprüche**

1. Verfahren zur Detektion eines Fehlerzustandes an einem FMCW-basierten Füllstandsmessgerät (1), das zur Messung eines Füllstands (L) eines einem Behälter (2) befindlichen Füllgutes (3) dient, folgende Verfahrensschritte umfassend:

   - Aussenden eines Radar-Signals ($S_{HF}$),
   - Empfang eines Antwort-Signals ($E_{HF}$),
   - Erstellung eines Mess-Signals ($s_{ZF}$) anhand von zumindest dem Antwort-Signal ($E_{HF}$),

   **gekennzeichnet durch**:

   - Ermittlung eines Korrelations-Koeffizienten (K) mittels einer Korrelation des Mess-Signals ($s_{ZF}$) mit einem Referenz-Signal ($s_{ref}$), und
   - Detektion des Fehlerzustandes, sofern der Korrelations-Koeffizient (K) einen vordefinierten Mindest-Wert ($K_{min}$) unterschreitet.

2. Verfahren nach Anspruch 1, wobei der Korrelations-Koeffizient (K) mittels einer Kreuzkorrelation, insbesondere gemäß der Formel

$$K = \sum_{i=1}^{n-\varphi} A_{ZF,i} * A_{ref,i+\varphi}$$

berechnet wird.

3. Verfahren nach Anspruch 1 oder 2, wobei das Referenz-Signal auf einer theoretisch hergeleiteten Ideal-Echokurve basiert.

4. Verfahren nach Anspruch 1 oder 2, wobei das Referenz-Signal ($s_{ref}$) auf einer Referenz-Messung, die unter vorbekannten Referenz-Messbedingungen vom Füllstandsmessgerät (1) durchgeführt ist, basiert.

5. Verfahren nach Anspruch 4, wobei die Referenz-Messbedingungen bei Unterschreiten eines Mindestfüllstandes ($L_{min}$) vorherrschen.

6. Verfahren nach zumindest einem der Ansprüche 1 bis 5, wobei anhand des Korrelations-Koeffizienten (K) und dessen Änderung über fortlaufende Füllstands-Messungen eine zeitabhängige Funktion (K(t)) des Korrelations-Koeffizienten (K) erstellt wird, und
   wobei für den Fall, dass der Korrelations-Koeffizienten (K) den vordefinierten Mindest-Wert ($K_{min}$) nicht unterschreitet, anhand der zeitabhängigen Funktion (K(t)) des Korrelations-Koeffizienten (K) eine Restbetriebszeit ($t_r$), zu der der Mindest-Wertes ($K_{min}$) unterschritten ist, berechnet wird.

7. Verfahren nach Anspruch 6, wobei die zeitabhängige Funktion (K(t)) des Korrelations-Koeffizienten (K) mittels einer Regression ermittelt wird.

8. Verfahren nach Anspruch 7, wobei zur Durchführung der Regression und/oder zur Ermittlung eines geeigneten Regressionstyps die Methode der kleinsten Quadrate angewendet wird.

9. Füllstandsmessgerät zur Durchführung des in zumindest einem der vorhergehend beschriebenen Ansprüche beschriebenen Verfahrens, umfassend:

   - Eine Signalerzeugungs-Schaltung (11) zur Erzeugung eines Radar-basierten Signals ($S_{HF}$),
   - eine Sendeantenne (14) zum Aussenden des Radar-Signals ($S_{HF}$),
   - eine Empfangsantenne (15) zum Empfang des Antwort-Signals ($E_{HF}$),
   - einen Mischer (16) zur Erzeugung des Mess-Signals ($s_{ZF}$) mittels Mischen des Radar-Signals (S$_{HF}$) mit dem Antwort-Signal (E$_{HF}$),

**gekennzeichnet durch**:

- eine Auswerte-Einheit (17, 18, 19) zur

  ∘ Ermittlung des Füllstandes (L) anhand des Mess-Signals (s$_{ZF}$),
  ∘ Ermittlung des Korrelations-Koeffizienten (K) anhand des Mess-Signals (s$_{ZF}$) und des Referenz-Signals (s$_{ref}$), und zur
  ∘ Detektion des Fehlerzustandes, sofern der Korrelations-Koeffizient (K) einen vordefinierten Mindest-Wert (K$_{min}$) unterschreitet.

10. Füllstandsmessgerät nach Anspruch 9, wobei die Auswerte-Einheit (17, 18, 19) ausgelegt ist, zur Ermittlung des Füllstandes (L) eine Fourier-Transformation, insbesondere eine Fast Fourier Transformation, des Mess-Signals (s$_{ZF}$) durchzuführen.

**Claims**

1. Method for detecting a faulty state on an FMCW-based level measuring device, wherein said measuring device serves to measure a level (L) of a medium (3) in a vessel (2), said method comprising the following steps:

   - Emission of a radar signal (S$_{HF}$),
   - Reception of a response signal (E$_{HF}$),
   - Generation of a measuring signal (s$_{ZF}$) using at least the response signal (E$_{HF}$),

   **characterized by** the following steps:

   - Determination of a correlation coefficient (K) using a correlation of the measuring signal (s$_{ZF}$) with a reference signal (s$_{ref}$), and
   - Detection of the faulty state if the correlation coefficient (K) drops below a predefined minimum value (K$_{min}$).

2. Method as claimed in Claim 1, wherein the correlation coefficient (K) is calculated using a cross-correlation, particularly according to the formula

$$K = \sum_{i=1}^{n-\varphi} A_{ZF,i} * A_{ref,i+\varphi}$$

.

3. Method as claimed in Claim 1 or 2, wherein the reference signal is based on a theoretically derived ideal echo curve.

4. Method as claimed in Claim 1 or 2, wherein the reference signal (s$_{ref}$) is based on a reference measurement performed by the level measuring device (1) under known reference measurement conditions.

5. Method as claimed in Claim 4, wherein the reference measurement conditions are present when a minimum level (L$_{min}$) is undershot.

6. Method as claimed in at least one of the Claims 1 to 5, wherein a time-dependent function (K(t)) of the correlation coefficient (K) is created on the basis of the correlation coefficient (K) and its change over continuous level measurements, and
wherein, in the event that the correlation coefficient (K) does not drop below the predefined minimum value (K$_{min}$), a remaining operating time (t$_r$) at which the minimum value (K$_{min}$) is undershot is calculated on the basis of the time-dependent function (K(t)) of the correlation coefficient (K).

7. Method as claimed in Claim 6, wherein the time-dependent function (K(t)) of the correlation coefficient (K) is determined by regression.

8. Method as claimed in Claim 7, wherein the least squares method is used to perform the regression and/or to determine a suitable type of regression.

9. Level measuring device to perform the method described in at least one of the previous claims, said measuring device comprising:

   - a signal generation circuit (11) designed to generate a radar-based signal (S$_{HF}$),
   - an transmission antenna (14) designed to transmit the radar signal (S$_{HF}$),
   - a reception antenna (15) designed to receive the response signal (E$_{HF}$),
   - a mixer (16) designed to generate the measuring signal (s$_{ZF}$) by mixing the radar signal (S$_{HF}$) with the response signal (E$_{HF}$),

   **characterized by**:

   - an evaluation unit (17, 18, 19) designed to

     ∘ Determine the level (L) using the measuring signal (s$_{ZF}$),
     ∘ Determine the correlation coefficient (K) using the measuring signal (s$_{ZF}$) and the reference signal (s$_{ref}$), and
     ∘ Detect the faulty state if the correlation coefficient (K) drops below a predefined minimum value (K$_{min}$).

10. Level measuring device as claimed in Claim 9, wherein the evaluation unit (17, 18, 19) is designed to perform a Fourier Transformation, particularly a Fast Fourier Transformation, of the measuring signal ($s_{ZF}$) for the purpose of determining the level (L).

## Revendications

1. Procédé destiné à la détection d'un état d'erreur sur un transmetteur de niveau basé sur la technologie FMCW, lequel transmetteur sert à mesurer un niveau (L) d'un produit (3) se trouvant dans un réservoir (2), lequel procédé comprend les étapes suivantes :

   - Émission d'un signal radar ($S_{HF}$),
   - Réception d'un signal de réponse ($E_{HF}$),
   - Génération d'un signal de mesure ($s_{ZF}$) à l'aide d'au moins le signal de réponse ($E_{HF}$),

   **caractérisé par** les étapes suivantes :

   - Détermination d'un coefficient de corrélation (K) au moyen d'une corrélation du signal de mesure ($s_{ZF}$) avec un signal de référence ($s_{ref}$), et
   - Détection de l'état d'erreur, dans la mesure où le coefficient de corrélation (K) est inférieur à une valeur minimale prédéfinie ($K_{min}$).

2. Procédé selon la revendication 1, pour lequel le coefficient de corrélation (K) est calculé au moyen d'une corrélation croisée, notamment selon la formule

$$K = \sum_{i=1}^{n-\varphi} A_{ZF,i} * A_{ref,i+\varphi}$$

   .

3. Procédé selon la revendication 1 ou 2, pour lequel le signal de référence est basé sur une courbe d'écho idéale déduite théoriquement.

4. Procédé selon la revendication 1 ou 2, pour lequel le signal de référence ($s_{ref}$) est basé sur une mesure de référence effectuée par le transmetteur de niveau (1) dans des conditions de mesure de référence connues.

5. Procédé selon la revendication 4, pour lequel les conditions de mesure de référence prévalent en cas de passage sous un niveau minimum ($L_{min}$).

6. Procédé selon l'une des revendications 1 à 5, pour lequel une fonction dépendant du temps (K(t)) du coefficient de corrélation (K) est créée à l'aide du coefficient de corrélation (K) et de sa variation sur des mesures de niveau continues, et pour lequel, dans le cas où le coefficient de corrélation (K) ne passe pas en dessous de la valeur mini-male prédéfinie ($K_{min}$), on calcule à l'aide de la fonction dépendant du temps (K(t)) du coefficient de corrélation (K) un temps de fonctionnement restant ($t_r$) auquel la valeur minimale ($K_{min}$) n'est pas atteinte.

7. Procédé selon la revendication 6, pour lequel la fonction dépendant du temps (K(t)) du coefficient de corrélation (K) est déterminée au moyen d'une régression.

8. Procédé selon la revendication 7, pour lequel on utilise la méthode des moindres carrés pour effectuer la régression et/ou pour déterminer un type de régression approprié.

9. Transmetteur de niveau destiné à la mise en œuvre du procédé décrit dans au moins l'une des revendications précédentes, lequel transmetteur comprend :

   - un circuit de génération de signal (11) destiné à générer un signal basé sur un radar ($S_{HF}$),
   - une antenne d'émission (14) destinée à émettre le signal radar ($S_{HF}$),
   - une antenne de réception (15) destinée à recevoir le signal de réponse ($E_{HF}$),
   - un mélangeur (16) destiné à générer le signal de mesure ($s_{ZF}$) en mélangeant le signal radar ($S_{HF}$) avec le signal de réponse ($E_{HF}$),

   **caractérisé par** :

   - une unité d'évaluation (17, 18, 19) destinée à la

     ◦ Détermination du niveau (L) à l'aide du signal de mesure ($s_{ZF}$),
     ◦ Détermination du coefficient de corrélation (K) à l'aide du signal de mesure ($s_{ZF}$) et du signal de référence ($s_{ref}$), et à la
     ◦ Détection de l'état d'erreur, dans la mesure où le coefficient de corrélation (K) est inférieur à une valeur minimale prédéfinie ($K_{min}$).

10. Transmetteur de niveau selon la revendication 9, pour lequel l'unité d'évaluation (17, 18, 19) est conçue pour effectuer une transformation de Fourier, notamment une transformation de Fourier rapide, du signal de mesure ($s_{ZF}$) en vue de la détermination du niveau (L).

$d$

$h$

$L_{min}$

$L$

$S_{HF}$

21

$E_{HF}$

2

22

1

4

3

Fig. 1

Fig. 2

Fig. 3a

Fig. 3b

Fig. 3c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2012139852 A1
- DE 102008050117 A1
- DE 102012003373